# DEMANDE DE BREVET EUROPEEN

(11) **EP 1 655 816 A2**
(43) Date de publication de la demande: **10.05.2006**
(21) Numéro de dépôt: 05292334.9
(22) Date de dépôt: 04.11.2005
(51) Int. Cl.: H02G 3/12, H02G 3/08

(54) **Plaque en verre masquant un accessoire électrique, et appareillage électrique s'y rapportant**

(30) Priorité: 04.11.2004 FR 0411784
(71) Demandeur: Meljac, 75015 Paris (FR)
(72) Inventeur: Bousquet André, 75015 Paris (FR)
(74) Mandataire: Pontet, Bernard

(57) **Abrégé**

L'invention concerne un dispositif de recouvrement encastrable pour masquer un accessoire électrique dans une paroi. Selon l'invention, le dispositif comprend une plaque en verre trempé pourvue d'au moins une ouverture pour accueillir une bague métallique, ladite bague étant maintenue dans l'ouverture au moyen d'une colle et destinée à recevoir ledit accessoire électrique.

## Description

La présente invention se rapporte à un dispositif de recouvrement encastrable pour masquer un accessoire électrique dans une paroi, ce dispositif comprenant une plaque en verre. Elle concerne également un appareillage électrique comprenant un accessoire électrique équipé d'un tel dispositif.

L'accessoire électrique peut être un connecteur électrique tel qu'une une prise téléphonique, un interrupteur ou encore un bouton poussoir.

Actuellement, les dispositifs de recouvrement d'accessoire électrique comprennent des plaques qui sont généralement en matière plastique ou métallique. Ces matières permettent une fixation aisée soit par vissage soit par clip.

La présente invention a pour but un nouveau dispositif de recouvrement comprenant une plaque en verre. Un autre but de l'invention est de proposer une mise à la terre efficace d'éléments métalliques du dispositif selon l'invention. En effet, pour de raisons de sécurité et de normes, les accessoires électriques doivent comporter une liaison à la terre. Lorsqu'un fil d'alimentation se détache d'un accessoire électrique et se connecte accidentellement à un élément métallique accessible, toute personne touchant ledit élément métallique accessible risquerait une décharge électrique. La liaison à la terre permet justement d'éviter la décharge en court-circuitant la ligne d'alimentation, et en activant ainsi le disjoncteur.

On atteint au moins l'un des buts précités avec un dispositif de recouvrement encastrable pour masquer un accessoire électrique dans une paroi. Selon l'invention, ce dispositif comprend une plaque en verre, notamment en verre trempé, pourvue d'au moins une ouverture pour accueillir une bague métallique, ladite bague étant maintenue dans l'ouverture au moyen d'une colle. Cette bague est également destinée à recevoir ledit accessoire électrique.

Avec le dispositif selon l'invention, on utilise une plaque en verre en combinaison avec au moins une bague métallique qui est fixée avec sécurité sans risque d'endommagement de la plaque en verre. En effet une fixation par vissage par exemple entraînerait à terme une détérioration du filetage réalisé dans le verre.

Avantageusement, la colle est disposée sur le pourtour latéral extérieur de la bague. L'invention est notamment remarquable par le fait qu'elle propose dans le cadre d'une combinaison verre-métal, un système de liaison à la terre simple et sûr. Ainsi, l'intérieur de la bague comporte un filetage dans lequel s'insère une tige filetée portant à son extrémité ledit accessoire électrique; et une seconde bague métallique est insérée autour de la tige filetée entre la première bague et l'accessoire électrique, cette seconde bague comportant une excroissance latérale dotée d'une borne métallique pour la mise à la terre de la première bague. On peut donc fixer le fil de liaison à la terre sur cette excroissance latérale qui peut être une patte parallèle à la plaque en verre, la borne étant dirigée du côté opposé à la plaque en verre.

Selon une caractéristique avantageuse de l'invention, la borne est dotée d'un filetage apte à accueillir un plot permettant de connecter électriquement ladite borne à au moins un fil de liaison à la terre.

Avec le système selon l'invention, un plot fait le lien entre la borne et le fil de liaison à la terre. Ce plot peut donc être adapté à la structure du dispositif et être adapté pour se conformer aux différentes normes électriques. En vissant le plot sur la borne, la liaison se fait avec sécurité.

Le dispositif peut donc être livré avec le plot pré-vissé dans la borne. Ainsi, à l'installation, l'utilisateur n'a plus qu'à fixer le fil de liaison à la terre au plot.

Selon une variante avantageuse de l'invention, le plot comporte :
- à sa base, une ouverture filetée apte à venir en prise avec la borne,
- à sa partie centrale, une ouverture pour recevoir ledit au moins un fil de liaison à la terre,
- à sa partie supérieure, un évidement apte à recevoir un outil de serrage du plot dans la borne, et
- entre sa partie supérieure et sa partie centrale, une vis de serrage pour fixer ledit au moins un fil dans le plot, la face supérieure du plot comprenant une ouverture d'accès à la tête de la vis de serrage.

Selon l'invention, le plot peut être en métal et/ou être constitué sous la forme d'une tige rigide cylindrique à section circulaire.

Avec une telle disposition, le plot occupe un faible encombrement.

Selon une autre variante de l'invention, le plot est constitué par une lame apte à plaquer ladite au moins un fil de liaison à la terre contre une face de ladite excroissance latérale, cette lame étant dotée d'une ouverture dans laquelle s'engage la borne; le plaquage étant obtenu par serrage d'un écrou en prise avec la borne.

Selon un mode de réalisation préféré de l'invention, la lame comporte à au moins une extrémité, une patte pour empêcher la fuite latérale dudit au moins un fil de liaison à la terre. Avantageusement, la hauteur de la patte est inférieure au diamètre dudit fil de liaison à la terre. Ainsi, la lame peut écraser fermement le fil sans que la patte n'empêche le serrage.

Autrement, la patte peut être en matière souple, et dans ce cas la hauteur peut être supérieure au diamètre du fil.

Selon une caractéristique avantageuse de l'invention, la plaque en verre comporte deux autres ouvertures pour une fixation à la paroi; et chacune des ouvertures porte une pièce conique en PVC ou matière plastique dur disposée entre une vis de fixation et le verre. Cette pièce épouse la forme du trou réalisé dans le verre. Elle a pour fonction d'amortir le choc qu'engendrerait le serrage au moyen d'une vis en acier par exemple. On évite ainsi la cassure du verre. En effet, si l'on applique une vis en acier directement contre le verre, ce dernier pourrait se briser.

Suivant un autre aspect de l'invention, il est proposé un appareillage électrique encastrable comprenant un accessoire électrique monté dans le logement d'un dispositif de recouvrement tel que décrit précédemment.

D'autres avantages et caractéristiques de l'invention apparaîtront à l'examen de la description détaillée d'un mode de mise en oeuvre nullement limitatif, et des dessins annexés, sur lesquels :
- La figure 1 est une vue schématique générale de dessus de la plaque en verre et de la première bague selon l'invention;
- La figure 2 est une vue en coupe éclatée du dispositif de la figure 1 associé à un accessoire électrique tel qu'un interrupteur;
- La figure 3 est une vue de côté du dispositif de la figure 2;
- La figure 4 est une vue de dessous d'une seconde bague selon l'invention;
- La figure 5 est une vue en perspective d'un premier plot suivant l'invention;
- La figure 6 est une vue en perspective du premier plot avec la base dirigée vers le haut;
- La figure 7 est une vue en coupe schématique du premier plot suivant la médiane;
- La figure 8 est une vue en coupe schématique d'un second plot serrant deux fils de liaison à la terre; et
- La figure 9 est une vue en perspective du second plot selon l'invention.

Bien que l'invention n'y soit pas limitée, on va maintenant décrire un dispositif de recouvrement pour masquer un interrupteur.

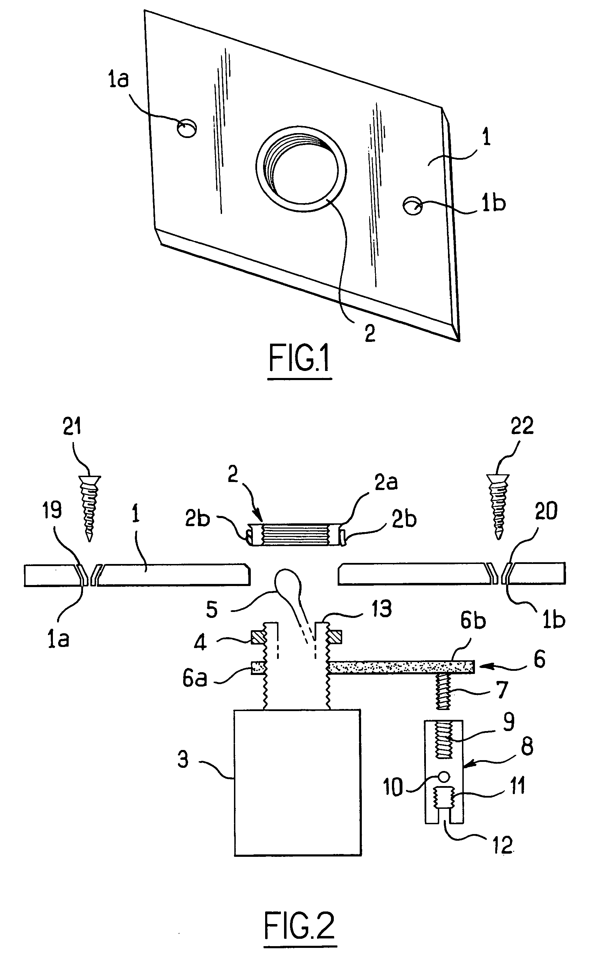

Sur la figure 1, on voit une plaque en verre trempée 1 portant une première bague métallique 2.Avantageusement, cette première bague 2 est maintenue dans une ouverture réalisée dans la plaque en verre 1 par collage. En outre, comme on le voit sur la figure 2, on prévoit des moyens de retenu 2a sur le bord extérieur de la première bague 2. Ces moyens de retenu présentent un diamètre supérieur au diamètre interne de l'ouverture réalisée dans la plaque en verre. Ainsi, la bague 2 ne peut pas complètement traverser l'ouverture de la plaque en verre.

Pour fixer la plaque en verre sur une paroi, on prévoit deux ouvertures 1a et 1b sur la figure 1. Pour éviter le contact entre le verre 1 et des vis 21 et 22 en acier, on utilise pour chaque trou 1a, 1b, une pièce en PVC 19, 20 de forme conique conformément à la figure 2.

La colle 2b est disposée sur le pourtour extérieur latéral de la première bague 2. Une fois la bague 2 introduite dans l'ouverture de la plaque en verre1, les moyens de retenu permettent de la positionner correctement, et la colle 2b la maintient fermement en place. L'homme du métier comprendra aisément qu'on utilise une colle puissante permettant de solidariser la bague métallique dans du verre.

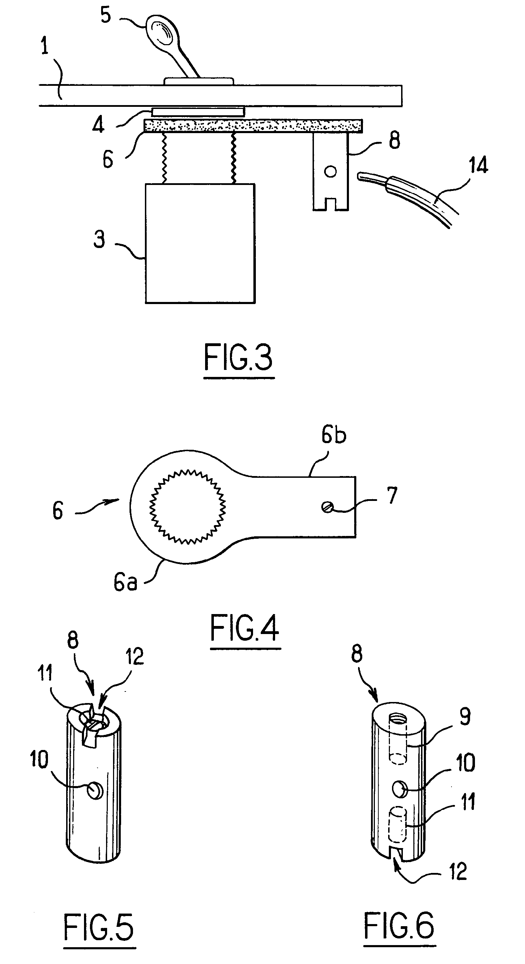

La vue en coupe de la figure 2 permet d'illustrer l'interaction des différents éléments du dispositif selon l'invention. L'interrupteur 5 est porté à l'extrémité d'une tige filetée 13, l'autre extrémité de la tige filetée 13 portant un boîtier électrique apte à recevoir deux fils d'alimentation non représentés. Sur le corps de la tige filetée 13, on visse un écrou de serrage permettant de positionner la tige filetée 13 dans la première bague 2. On visse également une seconde bague 6 qui comporte une partie 6a en forme d'écrou, comme on peut le voir sur la figure 4, et une partie 6b sous forme d'excroissance ou patte s'étendant hors de portée d'un cylindre vertical contenant le boîtier 3. La partie 6b porte une borne 7 sous la forme d'une petite tige filetée dirigée du côté opposé à la plaque en verre 1. La figure 3 montre le dispositif une fois monté.

La borne 7 est prévu pour venir en prise avec une ouverture filetée 9 d'un plot 8. Ce plot a pour fonction de relier la première bague 2 à la terre via la tige filetée 13, la seconde bague 6, la borne 7 et un fil de liaison à la terre 14 (voir figure 3).

Pour visser le plot 8 dans la borne 7, on utilise un tournevis dont la tête, plate ou cruciforme, est introduite dans un évidement 12 de forme plate ou cruciforme. Le fil 14 est convenablement introduit et fixé dans le plot 8 par l'ouverture 10.

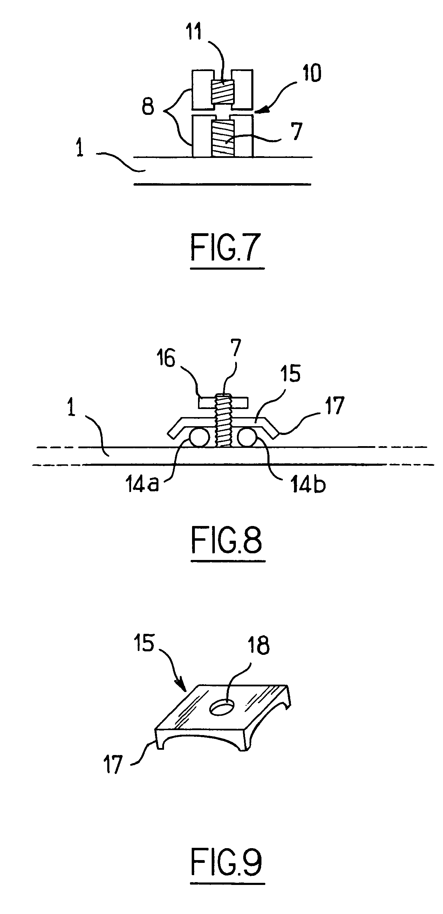

Les figures 5 à 7 illustrent un peu plus en détail le plot 8. on distingue une vis interne 11 accessible par la face du côté de l'ouverture 12. La vis 11 permet de fixer avec sécurité le fil 14 dans le plot 8. Pratiquement, le dispositif selon l'invention est mis en oeuvre en vissant le plot 8 dans la seconde bague métallique 6 via la borne 7 au moyen d'un tournevis introduit dans l'évidement 12, puis on fixe le fil 14 en utilisant un second tournevis adapté pour serrer la vis 11 vers la borne 7.

Sur les figures 8 et 9 est représenté un autre mode de réalisation d'un plot selon l'invention. Il est constitué d'une lame métallique 15 dotée d'une ouverture centrale 18 permettant d'accoupler la lame 15 à la vis 7. La liaison à la terre est réalisée ici par deux fils 14a et 14b disposés sous la lame 15 autour de la vis 7. Les pattes 17 de la lame 15 empêchent la fuite des deux fils 14a et 14b. Pour plaquer les deux fils 14a et 14b contre la seconde bague métallique 6, on utilise un écrou 16 en prise avec la vis 7. Le serrage de l'écrou 16 contraint la lame 15 à écraser les deux fils 14a et 14b.

Bien sûr, l'invention n'est pas limitée aux exemples qui viennent d'être décrits et de nombreux aménagements peuvent être apportés à ces exemples sans sortir du cadre de l'invention. On peut notamment envisager une plaque en verre portant plusieurs bagues recevant seuls ou en combinaison des interrupteurs, des boutons poussoirs, des prises téléphoniques ou autres.

## Revendications

**1.** Dispositif de recouvrement encastrable pour masquer un accessoire électrique dans une paroi, **caractérisé en ce qu'**il comprend une plaque en verre pourvue d'au moins une ouverture pour accueillir une bague métallique, ladite bague étant maintenue dans l'ouverture au moyen d'une colle et destinée à recevoir ledit accessoire électrique.

**2.** Dispositif selon la revendication 1, **caractérisé en ce que** la colle est disposée sur le pourtour latéral extérieur de la bague.

**3.** Dispositif selon la revendication 1 ou 2, **caractérisé en ce que** l'intérieur de la bague comporte un filetage dans lequel s'insère une tige filetée portant à son extrémité ledit accessoire électrique; et **en ce qu'**une seconde bague métallique est insérée autour de la tige filetée entre la première bague et l'accessoire électrique, ladite seconde bague comportant une excroissance latérale dotée d'une borne métallique pour la mise à la terre de la première bague.

**4.** Dispositif selon la revendication 3, **caractérisé en ce que** la borne est dotée d'un filetage apte à accueillir un plot permettant de connecter électriquement ladite borne à au moins un fil de liaison à la terre.

**5.** Dispositif selon la revendication 4, **caractérisé en ce que** ledit plot comporte :
- à sa base, une ouverture filetée apte à venir en prise avec la borne,
- à sa partie centrale, une ouverture pour recevoir ledit au moins un fil de liaison à la terre,
- à sa partie supérieure, un évidement apte à recevoir un outil de serrage du plot dans la borne, et
- entre sa partie supérieure et sa partie centrale, une vis de serrage pour fixer ledit au moins un fil dans le plot, la face supérieure du plot comprenant une ouverture d'accès à la tête de la vis de serrage.

**6.** Dispositif selon la revendication 5, **caractérisé en ce que** le plot est en métal.

**7.** Dispositif selon la revendication 5 ou 6, **caractérisé en ce que** le plot est sous forme d'une tige rigide cylindrique à section circulaire.

**8.** Dispositif selon la revendication 4, **caractérisé en ce que** le plot est constitué par une lame apte à plaquer ladite au moins un fil de liaison à la terre contre une face de ladite excroissance latérale, cette lame étant dotée d'une ouverture dans laquelle s'engage la borne; le plaquage étant obtenu par serrage d'un écrou en prise avec la borne.

**9.** Dispositif selon la revendication 8 **caractérisé en ce que** la lame comporte à au moins une extrémité, une patte pour empêcher la fuite latérale dudit au moins un fil de liaison à la terre.

**10.** Dispositif selon la revendication 9 **caractérisé en ce que** la hauteur de ladite patte est inférieure au diamètre dudit fil de liaison à la terre.

**11.** Dispositif selon la revendication 9, **caractérisé en ce que** ladite patte est en matière souple.

**12.** Dispositif selon l'une quelconque des revendications précédentes, **caractérisé en ce que** la plaque en verre comporte deux autres ouvertures pour une fixation à la paroi; et **en ce que** chacune des ouvertures porte une pièce conique en matière plastique dur disposée entre une vis de fixation et le verre.

**13.** Appareillage électrique encastrable comprenant un accessoire électrique monté dans le logement d'un dispositif de recouvrement selon l'une quelconque des revendications précédentes.
